# EUROPEAN PATENT APPLICATION

(11) **EP 4 654 294 A1**
(43) Date of publication of application: **26.11.2025**
(21) Application number: 24861516.3
(22) Date of filing: 28.04.2024
(51) Int. Cl.: H01M 4/36, H01M 4/62, H01M 4/134, H01M 10/0525

(54) **SILICON COMPOSITE MATERIAL AND PREPARATION METHOD THEREFOR, NEGATIVE ELECTRODE SHEET, SECONDARY BATTERY, AND ELECTRIC DEVICE**

(30) Priority: 06.09.2023 CN 202311145808
(71) Applicant: Contemporary Amperex Technology Co., Limited, Ningde, Fujian 352100 (CN)
(72) Inventor: WU, Kai, Ningde, Fujian 352100 (CN); CHEN, Ning, Ningde, Fujian 352100 (CN); SHI, Dongyang, Ningde, Fujian 352100 (CN); DENG, Yaqian, Ningde, Fujian 352100 (CN); LV, Ruijing, Ningde, Fujian 352100 (CN); WANG, Yuzhen, Ningde, Fujian 352100 (CN); WANG, Juan, Ningde, Fujian 352100 (CN)
(74) Representative: Lorenz Seidler Gossel Part. mbB
(86) International application number: PCT/CN2024/090343
(87) International publication number: WO 2025/050666

(57) **Abstract**

A silicon composite material and a preparation method therefor, a negative electrode sheet, a secondary battery, and an electric device. The silicon composite material comprises a core and a first coating layer covering the surface of the core; the core comprises a first core and a second core; the first core comprises a first conductive material; the first conductive material comprises a flexible conductive material; the second core comprises a silicon-based material of which the surface is coated with a second coating layer; and the second coating layer contains a second conductive material. The silicon composite material has the characteristics of good cycle performance and fast charging performance.

## Description

### RELATED APPLICATION

This application claims priority to Chinese Patent Application No. 2023111458084, entitled "Silicon Composite Material and Preparation Method Therefor, Negative Electrode Plate, Secondary Battery, and Electrical apparatus" filed on September 6, 2023, which is incorporated by reference in its entirety.

### TECHNICAL FIELD

The present application relates to the technical field of battery materials, in particular to a silicon composite material and a preparation method therefor, a negative electrode plate, a secondary battery, and an electrical apparatus.

### BACKGROUND

In recent years, with the increasing application range of lithium-ion batteries, the lithium-ion batteries are widely used in energy storage power systems such as hydropower, thermal power, wind power, and solar power plants, as well as in various fields such as electric tools, electric bicycles, electric motorcycles, electric vehicles, military equipment and aerospace. Due to the great development of the lithium-ion batteries, higher requirements have also been put forward for their energy density, cycle performance and safety performance.

Silicon-based materials have attracted attention due to their much higher capacity than carbon-based materials, as higher capacity means higher energy density can be achieved. However, the silicon-based materials will produce huge volume changes (>300%) during charging and discharging process. This change will cause material particles to break and conductive networks of electrode plates to collapse, affecting the cycle performance and fast charging performance of the batteries.

### SUMMARY OF THE INVENTION

The present application provides a silicon composite material with good cycle performance and fast charging performance, and a preparation method thereof, as well as a negative electrode plate, a secondary battery, and an electrical apparatus using the silicon composite material.

In a first aspect of the present application, a silicon composite material is provided, including a core and a first coating layer covering a surface of the core, wherein the core includes a first core and a second core; the first core includes a first conductive material; the first conductive material includes a flexible conductive material; the second core includes a silicon-based material of which a surface is coated with a second coating layer; and the second coating layer comprises a second conductive material.

The above silicon composite material can have both good expansion inhibition and conductivity, thereby effectively improving cycle performance and fast charging performance.

In some of the examples, the silicon-based material is a nanoscale or micronscale silicon-based material.

Optionally, Dv50 of the silicon-based material is in a range from 10 nm to 5 µm;
optionally, the silicon-based material includes one or both of pure silicon and silicon monoxide;
further optionally, Dv50 of the pure silicon is in a range from 10 nm to 150 nm; and further more optionally, the Dv50 of the pure silicon is in a range from 50 nm to 100 nm;
further optionally, Dv50 of the silicon monoxide is in a range from 2 µm to 5 µm; and further more optionally, the Dv50 of the silicon monoxide is in a range from 2.5 µm to 3.5 µm.

In some of the examples, the flexible conductive material includes one or both of soft carbon or graphite; optionally, the flexible conductive material includes graphite.

In some of the examples, the graphite includes one or both of the following features:
(1) Dv50 of the graphite is in a range from 1 µm to 5 µm; optionally, the Dv50 of the graphite is in a range from 1 µm to 3.5 µm; and
(2) the graphite comprises one or both of natural graphite and artificial graphite.

In some of the examples, the second conductive material includes a conductive carbon material; optionally, the conductive carbon material includes one or more of graphene, a single-walled carbon nanotube or a multi-walled carbon nanotube.

In some of the examples, a thickness of the second coating layer is in a range from 0.3 nm to 3 nm; optionally, the thickness of the second coating layer is in a range from 1.2 nm to 3 nm.

In some of the examples, a mass percentage of the first conductive material to the silicon-based material of which the surface is coated with the second coating layer is (10%-90%):(90%-10%); optionally, the mass percentage of the first conductive material to the silicon-based material of which the surface is coated with the second coating layer is (40%-90%):(60%-10%).

In some of the examples, the first coating layer includes a carbon coating layer; optionally, the carbon coating layer includes one or two of the following features:
(1) a thickness is in a range from 5 nm to 60 nm; optionally, the thickness is in a range from 20 nm to 60 nm; and
(2) the carbon coating layer comprises amorphous carbon.

In some of the examples, the silicon composite material includes one or both of the following features:
(1) tap density is in a range from 0.9 g/cm³ to 1.3 g/cm³;
(2) a specific surface area is in a range from 0.6 m²/g to 1.4 m²/g; and
(3) the Dv50 of the silicon composite material is in a range from 3 µm to 30 µm;
optionally, the silicon-based material includes pure silicon, and the Dv50 of the silicon composite material is in a range from 3 µm to 15 µm;
optionally, the silicon-based material includes silicon monoxide, and the Dv50 of the silicon composite material is in a range from 8 µm to 30 µm.

In a second aspect of the present application, a preparation method for a silicon composite material is provided, including the following steps:
mixing a first conductive material, a silicon-based material of which a surface is coated with a second coating layer, and water to prepare a dispersion; wherein the second coating layer comprises a second conductive material, and the first conductive material includes a flexible conductive material;
drying the dispersion to prepare a precursor; and
coating the precursor to form a first coating layer, wherein the first coating layer is coated on a surface of a core, the core includes a first core and a second core, the first core includes the first conductive material, and the second core includes the silicon-based material of which the surface is coated with the second coating layer.

The above preparation method has simple steps and is easy to promote and apply in industrialization.

In some of the examples, a method for preparing the silicon-based material of which the surface is coated with the second coating layer includes one or both of a vapor reaction method and a liquid-phase coating method, and the second coating layer comprises graphene;
optionally, preparing the silicon-based material of which the surface is coated with the second coating layer by the vapor reaction method includes the following steps:
performing vapor deposition on the silicon-based material in mixed gas of second carbon source gas and carbon dioxide to form the second coating layer, and preparing the silicon-based material of which the surface is coated with the second coating;
further optionally, a temperature of the vapor deposition is in a range from 600°C to 800°C;
further optionally, the second carbon source gas includes hydrocarbon gas; further more optionally, the second carbon source gas includes one or both of CH₄ or C₂H₄.

Optionally, preparing the silicon-based material of which the surface is coated with the second coating layer by the liquid-phase coating method includes the following steps:
mixing the silicon-based material with a second dispersant, water, and graphene oxide to prepare a mixed solution; and
drying and calcining the mixed solution to prepare the silicon-based material of which the surface is coated with the second coating;
further optionally, the second dispersant includes one or more of polyvinylpyrrolidone, polyethylene glycol, or sodium carboxymethyl cellulose;
further optionally, a drying condition includes: a temperature is in a range from 60°C to 80°C; and
further optionally, a calcination condition includes: a temperature is increased to 600°C-800°C at a heating rate of 2°C/min to 5°C/min under a reducing atmosphere condition, and calcining is performed for 1 h to 3 h.

In some of the examples, a solid content of the dispersion is in a range from 1% to 40%.

In some of the examples, a process of preparing the dispersion further includes a step of adding a first dispersant;
optionally, the first dispersant includes one or more of polyvinylpyrrolidone, polyethylene glycol, or sodium carboxymethyl cellulose; and
optionally, a percentage of mass of the first dispersant to total mass of the first conductive material and the silicon-based material of which the surface is coated with the second coating layer is (70%-95%):(30%-5%); further optionally, the percentage of the mass of the first dispersant to the total mass of the first conductive material and the silicon-based material of which the surface is coated with the second coating layer is (20%-5%):(80%-95%).

In some of the examples, the drying includes spray drying; optionally, the spray drying includes one or both of the following conditions:
(1) a temperature is in a range from 150°C to 200°C; and
(2) an air volume is in a range from 0.08 m³/min to 0.2 m³/min.

In some of the examples, the first coating layer includes a carbon coating layer, and a step of forming the first coating layer includes: placing the precursor in a reaction vessel, and introducing first carbon source gas for vapor deposition so as to form the first coating layer.

Optionally, a condition of introducing the first carbon source gas for vapor deposition includes one or both of the following conditions:
(1) the first carbon source gas comprises one or both of CH₄ or C₂H₂; and
(2) a temperature is first increased to 600°C-800°C at a heating rate of 2°C/min to 10°C/min, the temperature is kept for 1h to 4h, and then the first carbon source gas is introduced for 15 min to 30 min.

In a third aspect of the present application, a negative electrode plate is provided, including a negative electrode current collector and a negative electrode active material layer disposed on at least one surface of the negative electrode current collector, wherein the negative electrode active material layer includes one or more of the silicon composite material described in the first aspect or the silicon composite material prepared by the preparation method described in the second aspect.

In a fourth aspect of the present application, a secondary battery is provided, including the negative electrode plate described in the third aspect.

In a fifth aspect of the present application, an electrical apparatus is provided, including one or more of the negative electrode plate described in the third aspect or the secondary battery described in the fourth aspect.

Details of one or more examples of the present application are provided in the accompanying drawings and descriptions below. Other features, objectives, and advantages of the present application will become apparent from the specification, drawings, and claims.

### DESCRIPTION OF DRAWINGS

In order to better describe and illustrate the embodiments or examples provided by the present application, reference may be made to one or more accompanying drawings. The additional details or examples used for describing the accompanying drawings should not be considered as limiting the scope of any of the disclosed application, the currently described embodiments or examples and best modes of these application understood currently. Moreover, in all of the figures, identical parts are represented by identical reference numerals. In the figures:
FIG. 1 is a schematic diagram of a battery cell in an embodiment of the present application.
FIG. 2 is an exploded view of a battery cell in an embodiment of the present application as shown in FIG. 1.
FIG. 3 is a schematic diagram of a battery module in an embodiment of the present application.
FIG. 4 is a schematic diagram of a battery pack in an embodiment of the present application.
FIG. 5 is an exploded view of a battery pack in an embodiment of the present application as shown in FIG. 4.
FIG. 6 is a schematic diagram of an electrical apparatus in which a secondary battery serves as a power source in an embodiment of the present application.

Description of reference numerals:
1 Battery pack; 2 Upper box; 3 Lower box; 4 Battery module; 5 Battery cell; 51 Case; 52 Electrode assembly; 53 Cover plate; and 6 Electrical apparatus.

### DETAILED DESCRIPTION

Some embodiments of a silicon composite material and a preparation method therefor, a negative electrode plate, a secondary battery, and an electrical apparatus are disclosed in detail below with appropriate reference to the accompanying drawings. However, there may be cases where unnecessary detailed descriptions are omitted. For example, there are cases where detailed descriptions of well-known items and repeated descriptions of actually identical structures are omitted. This is to avoid unnecessary redundancy in the following descriptions and to facilitate understanding by those skilled in the art. In addition, the accompanying drawings and the following descriptions are provided for the full understanding of the present application by those skilled in the art and are not intended to limit the subject matter recorded in the claims.

The "range" disclosed in the present application may be defined in a form of a lower limit and an upper limit. A given range is defined by selecting a lower limit and an upper limit, and the selected lower limit and upper limit define the boundaries of the particular range. The range defined in this way may include or may not include end values, and any end value can be independently included or excluded, and can be combined arbitrarily, that is, any lower limit can be combined with any upper limit to form one range. For example, if the ranges 60-120 and 80-110 are listed for specific parameters, it is understood that the ranges 60-110 and 80-120 are also expected. Additionally, if minimum range values 1 and 2 are listed, and if maximum range values 3, 4 and 5 are further listed, the following ranges are all contemplatable: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" represents that all real numbers between "0-5" have been listed herein, and "0-5" is only a shortened representation of these numerical combinations. In addition, when a parameter is expressed as an integer greater than or equal to 2, it is equivalent to listing that the parameter is, for example, an integer of 2, 3, 4, 5, 6, 7, 8, 9, 10, 11, 12, or the like. For example, when a parameter is expressed as an integer selected from "2-10", it is equivalent to listing an integer of 2, 3, 4, 5, 6, 7, 8, 9 and 10.

The "plurality", "multiple" and the like involved in the present application, unless otherwise specified, refer to a number greater than 2 or equal to 2. For example, the "one or more" means one or greater than or equal to two.

Unless otherwise specified, all embodiments and optional embodiments of the present application may be combined with each other to form new technical solutions.

Reference herein to "an embodiment" means that a particular feature, structure, or characteristic described in connection with the embodiment can be comprised in at least one example or embodiment of the present application. The appearances of the phrase in various places in the specification neither necessarily refer to a same embodiment, nor are independent or alternative embodiments mutually exclusive from other embodiments. Those skilled in the art understand, both explicitly and implicitly, that the embodiments described herein may be combined with other embodiments. The "embodiment" mentioned herein is understood similarly.

Those skilled in the art can understand that in the method of the various embodiments or examples, a writing order of all the steps does not mean a strict execution order which constitutes any restriction on an implementation process, and the specific execution order of all the steps should be determined by its function and possible internal logic. Unless otherwise particularly stated, all steps in the present application may be performed sequentially or may be performed randomly, and are preferably performed sequentially. For example, the method comprises steps (a) and (b), meaning that the method may comprise steps (a) and (b) performed sequentially, or may comprise steps (b) and (a) performed sequentially. For example, the reference to the method may further include step (c), meaning that step (c) may be added to the method in any order. For example, the method may include steps (a), (b) and (c), or may further include steps (a), (c) and (b), or may further include steps (c), (a) and (b), and the like.

In the present application, the open technical features or technical solutions described by the words "contain", "include", "comprises", etc., unless otherwise specified, do not exclude additional members other than the listed members, and can be regarded as providing both closed features or solutions consisting of the listed members and open features or solutions including additional members other than the listed members. For example, A includes a1, a2 and a3. Unless otherwise specified, A may further include other members, or may not include additional members. It can be regarded as providing both the feature or solution of "A consists of a1, a2 and a3" and the feature or solution of "A includes not only a1, a2 and a3, but also other members". In the present application, unless otherwise specified, A (such as B) means that B is a non-limiting example of A, and may be understood as that A is not limited to B.

In the present application, the "optionally" and "optional" mean dispensable, that is, they mean any one selected from two parallel solutions of "presence" or "absence." If a plurality of "optional" appear in a technical solution, unless otherwise specified and in the case of no contradiction or mutually restrictive relationship, each "optional" is independent.

In some examples of the present application, a silicon composite material is provided, including a core and a first coating layer covering a surface of the core, wherein the core includes a first core and a second core; the first core includes a first conductive material; the first conductive material includes a flexible conductive material; the second core includes a silicon-based material of which a surface is coated with a second coating layer; and the second coating layer comprises a second conductive material.

The silicon composite material above comprehensively improves an expansion property and a conductive network of the silicon composite material in two aspects: firstly, the second coating layer containing the second conductive material is coated on the surface of the silicon-based material, the presence of the second conductive material can improve conductivity of the silicon-based material on the one hand, and can also make the silicon-based material, especially the silicon-based material with a small particle size, uniformly dispersed and easily coated by the first coating layer on the other hand; secondly, the first conductive material containing the flexible conductive material is mixed with the silicon-based material of which the surface is coated with the second coating layer as the core, and the presence of the flexible conductive material can buffer the expansion of the silicon-based material and has good conductivity. In this way, the above silicon composite material can have both good expansion inhibition and conductivity, thereby effectively improving cycle performance and fast charging performance.

In addition, the presence of the coating layer can protect the internal particles and better isolate an electrolyte solution from corroding the interior of the material in the cycle process.

It can be understood that the silicon-based material may be pre-lithiated or non-pre-lithiated.

In some of the examples, the silicon-based material is a nanoscale or micronscale silicon-based material. Using the silicon-based material with the small particle size can further reduce expansion. It can be understood that "nanoscale" means that Dv50 of the silicon-based material satisfies 1 nanometer (nm)≤Dv50<100 nm, and "micronscale" means that the Dv50 of the silicon-based material satisfies 1 micrometer (µm)≤Dv50<10 µm.

In some of the examples, the Dv50 of the silicon-based material is in a range from 10 nm to 5 µm. Reasonable control of the particle size of the silicon-based material is beneficial to the improvement of the fast charging performance and a cycle life. In addition, it is further beneficial to the formation and dispersion of the particles. Specifically, the Dv50 of the silicon-based material includes but not limited to: 10 nm, 20 nm, 30 nm, 40 nm, 50 nm, 70 nm, 80 nm, 90 nm, 100 nm, 110 nm, 115 nm, 120 nm, 150 nm, 200 nm, 400 nm, 600 nm, 800 nm, 1 µm, 2 µm, 3 µm, 4 µm, 5 µm or a range consisting of any two of the above values.

In some of the examples, the silicon-based material includes one or both of pure silicon and silicon monoxide (SiOx, 0<x<2).

Further, Dv50 of the pure silicon is in a range from 10 nm to 150 nm. Specifically, the Dv50 of the pure silicon includes but not limited to: 10 nm, 20 nm, 30 nm, 40 nm, 50 nm, 70 nm, 80 nm, 90 nm, 100 nm, 110 nm, 115 nm, 120 nm, 150 nm, or a range consisting of any two of the above values. Furthermore, the Dv50 of the pure silicon is in a range from 50 nm to 100 nm.

Further, Dv50 of the silicon monoxide is in a range from 2 µm to 5 µm. Specifically, the Dv50 of the silicon monoxide includes but not limited to: 2 µm, 2.5 µm, 3 µm, 3.5 µm, 4 µm, 5 µm, or a range consisting of any two of the above values. Furthermore, the Dv50 of the silicon monoxide is in a range from 2.5 µm to 3.5 µm.

In some of the examples, the flexible conductive material includes one or both of soft carbon or graphite. Further, the flexible conductive material includes graphite. Using the graphite as the flexible conductive material has a better effect of buffering the expansion of the silicon-based material and has good conductivity. In addition, the shape of the graphite is not limited, and the graphite may be a spherical, granular, or flake shape or a combination of the above shapes.

In some of the examples, Dv50 of the graphite is in a range from 1 µm to 5 µm. Reasonable control of the Dv50 of the graphite is beneficial to the improvement of the fast charging performance and the cycle life. Specifically, the Dv50 of the graphite includes but not limited to: 1 µm, 1.5 µm, 2 µm, 2.5 µm, 3 µm, 3.5 µm, 4 µm, 4.5 µm, 5 µm, or a range consisting of any two of the above values. Further, the Dv50 of the graphite is in a range from 1 µm to 3.5 µm.

In some of the examples, the graphite includes one or both of natural graphite and artificial graphite. optionally, the graphite includes the artificial graphite. This is beneficial to improving the cycle life.

In some of the examples, the second conductive material includes a conductive carbon material. Further, the conductive carbon material includes one or more of graphene, a single-walled carbon nanotube or a multi-walled carbon nanotube. Furthermore, the conductive carbon material includes graphene. Using the graphene as the second conductive material to coat the silicon-based materials has a good coating effect, which is beneficial for improving conductivity.

In some of the examples, a thickness of the second coating layer is in a range from 0.3 nm to 3 nm. Reasonable control of the thickness of a graphene layer makes the material relatively soft, which facilitates complete coating of the silicon-based material and is beneficial to improving the cycle life. Specifically, the thickness of the second coating layer includes but not limited to: 0.3 nm, 0.8 nm, 1 nm, 1.2 nm, 1.5 nm, 2 nm, 2.5 nm, 3 nm, or a range consisting of any two of the above values. Further, the thickness of the second coating layer is in a range from 1.2 nm to 3 nm.

In some of the examples, a mass percentage of the first conductive material to the silicon-based material of which the surface is coated with the second coating layer is (10%-90%):(90%-10%). On the one hand, this helps to reduce the expansion of the material, and on the other hand, it can also make the material have a higher capacity, further improving the fast charging performance and the cycle performance. A higher proportion of the silicon-based material can increase the capacity of the material. However, in a traditional method, when the proportion of the silicon-based material reaches 90%, the material expands significantly. For example, anode full-charge rebound can reach more than 300%. The solution of the present application can effectively improve the expansion of the material. When the mass percentage of the first conductive material to the silicon-based material of which the surface is coated with the second coating layer is within the range of (10%-90%):(90%-10%), the low anode full-charge rebound can be maintained.

Specifically, the mass percentage includes but not limited to: 10%:90%, 20%:80%, 30%:70%, 40%:60%, 50%:50%, 60%:40%, 70%:30%, 80%:20%, 90%: 10% or a range consisting of any two of the above values. Further, a mass percentage of the first conductive material to the silicon-based material of which the surface is coated with the second coating layer is (40%-90%):(60%-10%).

In some of the examples, the first coating layer includes a carbon coating layer. Coating the core with the carbon coating layer can further buffer the expansion of the silicon-based material and help improve the conductivity between the particles at the same time.

In some of the examples, a thickness of the carbon coating layer is in a range from 5 nm to 60 nm. This can better isolate the electrolyte solution from corroding the material in the cycle process, improve the cycle performance, and further improve the conductivity of the material at the same time. Specifically, the thickness of the carbon coating layer includes but not limited to: 5 nm, 10 nm, 15 nm, 20 nm, 25 nm, 30 nm, 35 nm, 40 nm, 45 nm, 50 nm, 55 nm, 60 nm, or a range consisting of any two of the above values. Further, the thickness of the carbon coating layer is in a range from 20 nm to 60 nm.

Without limitation, the carbon coating layer includes amorphous carbon.

In some of the examples, tap density of the silicon composite material is in a range from 0.9 grams per cubic centimeter (g/cm³) to 1.3 g/cm³.

In some of the examples, a specific surface area the silicon composite material is 0.6 square meters per gram (m²/g) to 1.4 m²/g;

In some of the examples, the Dv50 of the silicon composite material is in a range from 3 µm to 30 µm.

Further, the silicon-based material includes pure silicon, and the Dv50 of the silicon composite material is in a range from 3 µm to 15 µm.

Further, the silicon-based material includes silicon monoxide, and the Dv50 of the silicon composite material is in a range from 8 µm to 30 µm.

Some other examples of the present application provide a preparation method for a silicon composite material, including the following steps:
a first conductive material and a silicon-based material of which a surface is coated with a second coating layer are mixed with water to prepare a dispersion; wherein the second coating layer comprises a second conductive material, and the first conductive material includes a flexible conductive material;
the dispersion is dried to prepare a precursor; and
the precursor is coated to form a first coating layer, wherein the first coating layer is coated on a surface of a core, the core includes a first core and a second core, the first core includes the first conductive material, and the second core includes the silicon-based material of which the surface is coated with the second coating layer.

The above preparation method has simple steps and is easy to promote and apply in industrialization.

It can be understood that the silicon composite material prepared by the above preparation method has the same or similar solution and effect as the aforementioned silicon composite material, and will not be repeated here.

In some of the examples, a method for preparing the silicon-based material of which the surface is coated with the second coating layer includes one or both of a vapor reaction method and a liquid-phase coating method. Without limitation, equipment for the vapor reaction method can be any equipment suitable for a gas condensation method, a hydrogen arc plasma method, a sputtering method, a vacuum deposition method, a mixed plasma method, a gas phase decomposition method, plasma heating physical gas-phase synthesis, a wire electric explosion technology, a laser-induction composite heating method or a laser-induced chemical vapor deposition method.

Further, the second coating layer comprises graphene, and preparing the silicon-based material of which the surface is coated with the second coating layer by the vapor reaction method includes the following steps:
performing vapor deposition on the silicon-based material in mixed gas of second carbon source gas and carbon dioxide to form the second coating layer, and preparing the silicon-based material of which the surface is coated with the second coating layer.

In some of the examples, a temperature of the vapor deposition is in a range from 600°C to 800°C; and
in some of the examples, the second carbon source gas includes hydrocarbon gas. Without limitation, the second carbon source gas includes one or both of CH₄ or C₂H₄.

Further, the second coating layer comprises graphene, and preparing the silicon-based material of which the surface is coated with the second coating layer by the liquid-gas coating method includes the following steps:
the silicon-based material is mixed with a second dispersant, water, and graphene oxide to prepare a mixed solution; and
the mixed solution is dried and calcined to prepare the silicon-based material of which the surface is coated with the second coating layer.

In some of the examples, the second dispersant includes one or more of polyvinylpyrrolidone (PVP), polyethylene glycol, or sodium carboxymethyl cellulose (CMC).

In some of the examples, a drying condition includes: a temperature is in a range from 60°C to 80°C.

In some of the examples, a calcination condition includes: a temperature is increased to 600°C-800°C at a heating rate of 2 celsius degree/minute (°C/min) to 5°C/min under protection of a reducing atmosphere, and calcining is performed for 1 hour (h) to 3 h. Without limitation, inert gas includes argon and hydrogen, and a volume ratio of the argon to the hydrogen may be (90-98):(10-2). It can be understood that a cooling step is included following the calcination, such as natural cooling to a room temperature.

In addition, in some of the examples, a solid content of the dispersion is in a range from 1% to 40%.

In some of the examples, a process of preparing the dispersion further includes a step of adding a first dispersant. By introducing the first dispersant, the first conductive material and the silicon-based material of which the surface is coated with the second coating layer may be evenly dispersed, thereby improving the cycle performance and the fast charging performance.

In some of the examples, the first dispersant includes one or more of polyvinylpyrrolidone (PVP), polyethylene glycol, or sodium carboxymethyl cellulose (CMC).

In some of the examples, a percentage of mass of the first dispersant to total mass of the first conductive material and the silicon-based material of which the surface is coated with the second coating layer is (30%-5%):(70%-95%). Specifically, the percentage includes but not limited to: 30%:70%, 25%:75%, 20%:80%, 15%:85%, 10%:90%, 5%:95% or a range consisting of any two of the above values. Further, the percentage is (20%-5%):(80%-95%).

In some of the examples, the drying includes spray drying.

In some of the examples, a temperature of the spray drying is in a range from 150°C to 200°C.

In some of the examples, an air volume of the spray drying is in a range from 0.08 cubic meters per minute (m³/min) to 0.2 m³/min.

In some of the examples, the first coating layer includes a carbon coating layer, and a step of forming the first coating layer includes: placing the precursor in a reaction vessel, and introducing first carbon source gas for vapor deposition so as to form the first coating layer.

In some of the examples, in a process of introducing the first carbon source gas for vapor deposition, the first carbon source gas includes one or both of CH₄ or C₂H₂.

In some of the examples, in the process of introducing the first carbon source gas for vapor deposition, the temperature is first increased to 600°C-800°C at a heating rate of 2°C/min to 10°C/min, the temperature is kept for 1h to 4h, and then the first carbon source gas is introduced for 15 minutes (min) to 30 min.

Some other examples of the present application provide a negative electrode plate, including a negative electrode current collector and a negative electrode active material layer disposed on at least one surface of the negative electrode current collector, wherein the negative electrode active material layer includes one or more of the silicon composite material as described above or the silicon composite material prepared by the preparation method as described above.

Some other examples of the present application provides a secondary battery, including the negative electrode plate as described above.

Some other examples of the present application provide an electrical apparatus, including one or more of the negative electrode plate as described above or the secondary battery as described above.

In addition, the secondary battery and the electrical apparatus in the present application are described below with appropriate reference to the accompanying drawings.

In general, the secondary battery includes a positive electrode plate, a negative electrode plate, an electrolyte, and a separator. During the charging and discharging process of the battery, active ions are intercalated and deintercalated back and forth between the positive electrode plate and the negative electrode plate. The electrolyte plays a role in conducting ions between the positive electrode plate and negative electrode plate. The separator is arranged between the positive electrode plate and the negative electrode plate and mainly serves to prevent a short circuit between the positive and negative electrodes while allowing ions to pass through.

### Positive electrode plate

It can be understood that the battery is accompanied by de-intercalation and consumption of lithium (Li) during the charge and discharge process, and a content of Li in the positive electrode plate is different when the battery is discharged to different states. In the list of positive electrode materials in the present application, unless otherwise specified, the content of Li refers to an initial state of the material. The positive electrode material is applied to the positive electrode plate in a battery system. After charge and discharge cycles, the content of Li in the positive electrode material contained in the electrode plate usually changes. The content of Li may be measured by a molar content, but is not limited thereto. Regarding "the content of Li is the initial state of the material", the initial state of the material refers to a state before feeding the material to a positive electrode slurry. It can be understood that new materials obtained by appropriate modification on the basis of the listed positive electrode material also fall within the scope of positive electrode materials. The aforementioned appropriate modification refers to acceptable modification manners for the positive electrode materials, and a non-limiting example is, for example, coating modification.

In the list of the positive electrode materials in the present application, a content of oxygen (O) is only a theoretical state value. Lattice oxygen release will cause the molar content of oxygen (O) to change. In reality, the content of O may fluctuate. The content of O may be measured by a molar content, but is not limited thereto.

The positive electrode plate includes a positive electrode current collector and a positive electrode active material layer disposed on at least one surface of the positive electrode current collector. The positive electrode active material layer includes a positive electrode active material.

As a non-limiting example, the positive electrode current collector has two surfaces opposite in its own thickness direction, and the positive electrode active material layer is disposed on either one or both of the two opposite surfaces of the positive electrode current collector.

In some of the examples, the positive electrode current collector may be a metal foil or a composite current collector. For example, as a metal foil, an aluminum foil may be used. The composite current collector may include a high molecular material substrate layer and a metal layer formed on at least one surface of the high molecular material substrate layer. The composite current collector may be obtained by forming a metal material on a high molecular material substrate. In the positive electrode current collector, non-limiting examples of the metal material may include one or more of aluminum, an aluminum alloy, nickel, a nickel alloy, titanium, a titanium alloy, silver, and a silver alloy. In the positive electrode current collector, non-limiting examples of the high molecular material substrate may include one or more of substrates such as polypropylene (PP), polyethylene terephthalate (PET), polybutylene terephthalate (PBT), polystyrene (PS), and polyethylene (PE).

In some of the examples, the positive electrode active material may be a positive electrode active material for the battery well known in the art. As a non-limiting example, the positive electrode active material may include one or more of the following materials: a lithium-containing phosphate of an olivine structure, a lithium transition metal oxide, and respective modified compounds thereof. However, the present application is not limited to these materials, and other conventional materials that can be used as positive electrode active materials for batteries may also be used. Only a single one of or a combination of two or more of these positive electrode active materials can be used. Examples of the lithium transition metal oxide may include but not limited to, one or more of a lithium-cobalt oxide (such as LiCoO₂), a lithium-nickel oxide, a lithium-manganese oxide, a lithium-nickel-cobalt oxide, a lithium-manganese-cobalt oxide, a lithium-nickel-manganese oxide, a lithium-nickel-cobalt-manganese oxide, a lithium-nickel-cobalt-aluminum oxide, and a modified compound thereof. Non-limiting examples of the lithium-containing phosphate of the olivine structure may include but not limited to, one or more of a lithium iron phosphate, a lithium iron phosphate-carbon composite material, a lithium manganese phosphate, a lithium manganese phosphate-carbon composite material, a lithium iron manganese phosphate, and a lithium iron manganese phosphate-carbon composite material. Non-limiting examples of the lithium-cobalt oxide may include LiCoO₂; non-limiting examples of the lithium-nickel oxide may include LiNiO₂; non-limiting examples of the lithium-manganese oxide may include LiMnO₂, LiMn₂O₄ and the like; and non-limiting examples of the lithium-nickel-cobalt-manganese oxide may include LiNi_{1/3}Co_{1/3}Mn_{1/3}O₂ (or abbreviated as NCM₃₃₃), LiNi_{0.5}Co_{0.2}Mn_{0.3}O₂ (or abbreviated as NCM₅₂₃), LiNi_{0.5}Co_{0.25}Mn_{0.25}O₂ (or abbreviated as NCM₂₁₁), LiNi_{0.6}Co_{0.2}Mn_{0.2}O₂ (or abbreviated as NCM₆₂₂), LiNi_{0.8}Co_{0.1}Mn_{0.1}O₂ (or abbreviated as NCM₈₁₁), and the like. Non-limiting examples of the lithium-nickel-cobalt-aluminum oxide may include LiNi_{0.80}Co_{0.15}Al_{0.05}O₂.

In some of the examples, the positive electrode active material layer further optionally includes a binder. As a non-limiting example, the binder may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer, and a fluorinated acrylate resin.

In some of the examples, the positive electrode active material layer further optionally includes a conductive agent. As a non-limiting example, the conductive agent may include one or more of superconducting carbon, acetylene black, carbon black, ketjen black, carbon dots, carbon nanotubes, graphene, and carbon nanofibers.

In some of the examples, the positive electrode plate may be prepared by the following manner: the above components for preparing the positive electrode plate, such as the positive electrode active material, the conductive agent, the binder, and any other components are dispersed in a solvent to form the positive electrode slurry; and a surface of at least one side of the positive electrode current collector is coated with the positive electrode slurry, and drying, cold pressing and other processes are performed to obtain the positive electrode plate. The type of the solvent may be selected from, but is not limited to, any one in the above embodiments, such as N-methylpyrrolidone (NMP). The surface of the positive electrode current collector coated with the positive electrode slurry may be a single surface of the positive electrode current collector or two surfaces of the positive electrode current collector. The surface of the positive electrode current collector coated with the positive electrode slurry may be a single surface of the positive electrode current collector or two surfaces of the positive electrode current collector. A solid content of the positive electrode slurry may be in a range from 40wt% to 80wt%. Viscosity of the positive electrode slurry at the room temperature may be adjusted to 5,000 millipascals per second (mPa·s) to 25,000 mPa·s. When the positive electrode slurry is coated, unit surface density of the coating may be 15 milligrams per square centimeter (g/m²) to 35 g/m² based on dry weight (excluding the solvent). Compacted density of the positive electrode plate may be 3.0 grams per cubic centimeter (g/m³) to 3.6 g/cm³, optionally 3.3 g/cm³ to 3.5 g/cm³.

### Negative electrode plate

The negative electrode plate is as described above.

As a non-limiting example, the negative electrode current collector has two surfaces opposite in its own thickness direction, and the negative electrode active material layer is disposed on either one or both of the two opposite surfaces of the negative electrode current collector.

In some of the examples, the negative electrode current collector may be a metal foil or a composite current collector. For example, as a metal foil, a copper foil may be used. The composite current collector may include a high molecular material substrate layer and a metal layer formed on at least one surface of the high molecular material substrate. The composite current collector may be obtained by forming a metal material on a high molecular material substrate. In the negative electrode current collector, non-limiting examples of the metal material may include one or more of copper, a copper alloy, nickel, a nickel alloy, titanium, a titanium alloy, silver, and a silver alloy. In the negative electrode current collector, non-limiting examples of the high molecular material substrate may include one or more of substrates such as polypropylene (PP), polyethylene terephthalate (PET), polybutylene terephthalate (PBT), polystyrene (PS), and polyethylene (PE).

In some of the examples, the negative electrode active material layer may further include other negative electrode active materials for the battery well known in the art. As a non-limiting example, the negative electrode active materials may include one or more of the following materials: artificial graphite, natural graphite, soft carbon, hard carbon, a silicon-based material, a tin-based material, lithium titanate, and the like. The silicon-based material may include one or more of elemental silicon, a silicon oxide, a silicon-carbon composite, a silicon-nitrogen composite, and a silicon alloy. The tin-based material may include one or more of elementary tin, a tin oxide, and a tin alloy. However, the present application is not limited to these materials, and other conventional materials that can be used as negative electrode active materials for batteries may also be used. Only a single one of or a combination of two or more of these negative electrode active materials can be used.

In some of the examples, the negative electrode active material layer further optionally includes a binder. The binder may include one or more of styrene butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some of the examples, the negative electrode active material layer further optionally includes a conductive agent. The conductive agent may include one or more of superconducting carbon, acetylene black, carbon black, ketjen black, carbon dots, carbon nanotubes, graphene, and carbon nanofibers.

In some of the examples, the negative electrode active material layer further optionally includes other adjuvants, for example, a thickener (such as sodium carboxymethyl cellulose (CMC-Na)).

In some of the examples, the negative electrode plate may be prepared by the following manner: the above components for preparing the negative electrode plate, such as the negative electrode active material, the conductive agent, the binder, and any other components are dispersed in a solvent (a non-limiting example of the solvent is deionized water) to form the negative electrode slurry; and a surface of at least one side of the negative electrode current collector is coated with the negative electrode slurry, and drying, cold pressing and other processes are performed to obtain the negative electrode plate. The surface of the negative electrode current collector coated with the negative electrode slurry may be a single surface of the negative electrode current collector or two surfaces of the negative electrode current collector. A solid content of the negative electrode slurry may be in a range from 40wt% to 60wt%. Viscosity of the negative electrode slurry at a room temperature may be adjusted to 2,000 mPa·s to 10,000 mPa·s. When the negative electrode slurry is coated, unit surface density of the coating may be 75 g/m² to 220 g/m² based on dry weight (excluding the solvent). Compacted density of the negative electrode plate may be in a range from 1.0 g/cm³ to 1.8 g/cm³.

### Electrolyte

The electrolyte serves for conducting ions between the positive electrode plate and the negative electrode plate. The present application has no specific limitation on a type of the electrolyte, which can be selected according to requirements. For example, the electrolyte may be liquid, gelled, or all solid.

In some of the examples, the electrolyte adopts an electrolyte solution. The electrolyte solution includes an electrolyte salt and a solvent.

In some of the examples, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluoro(oxalato)borate (LiDFOB), lithium bis(oxalato)borate (LiBOB), lithium difluoro bis(oxalato)phosphate (LiDFOP), and lithium tetrafluoro(oxalato)phosphate (LiTFOP).

In some of the examples, the solvent may include one or more of ethylene carbonate (EC, 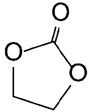 ), propylene carbonate (PC, 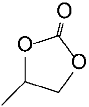 ), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate ( 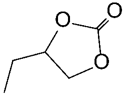 ), fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, methylsulfonylmethane, ethyl methyl sulfone and ethylsulfonylethane.

In some of the examples, the electrolyte solution further optionally includes an additive. For example, the additive may include a negative electrode film-forming additive and a positive electrode film-forming additive, and may further include an additive capable of improving certain performance of a battery, such as an additive for improving overcharging performance of the battery, an additive for improving high temperature or low temperature performance of the battery, etc.

In some of the examples, the additive in the electrolyte solution may include but not limited to one or more of fluoroethylene carbonate (FEC), difluoroethylene carbonate (DFEC), trifluoromethylethylene carbonate (TFPC), and the like.

### Separator

In some of the examples, the secondary battery further includes a separator. The type of the separator is not particularly limited in the present application, and any known separator of a porous structure with good chemical stability and mechanical stability can be selected.

In some of the examples, a material of the separator may include one or more of glass fiber, non-woven cloth, polyethylene, polypropylene, and polyvinylidene fluoride. The separator may be a single-layer film or a multi-layer composite film, which is not particularly limited. When the separator is the multi-layer composite film, materials of the layers may be the same or different, which is not particularly limited.

In some of the examples, a thickness of the separator is in a range from 6 µm to 40 µm, optionally in a range from 12 µm to 20 µm.

In some of the examples, the positive electrode plate, the negative electrode plate, and the separator may be formed into an electrode assembly by a winding process or a stacking process.

In some of the examples, the secondary battery may include an outer package. The outer package may be used to encapsulate the above electrode assembly and the electrolyte.

In some of the examples, the outer package of the secondary battery may be a hard shell, such as a hard plastic shell, an aluminum shell, and a steel shell. The outer package of the secondary battery may also be a soft package, such as a bag-type soft package. A material of the soft package may be plastic, and further, non-limiting examples of the plastic may include one or more of polypropylene, polybutylene terephthalate, polybutylene succinate and the like.

The secondary battery includes at least one battery cell. The secondary battery may include one or more battery cells.

In the present application, unless otherwise specified, a "battery cell" refers to a basic unit that can realize the mutual conversion of chemical energy and electrical energy, and further, generally speaking, at least includes a positive electrode plate, a negative electrode plate and an electrolyte. During the charging and discharging process of the battery, active ions are intercalated and deintercalated back and forth between the positive electrode plate and the negative electrode plate. The electrolyte serves for conducting active ions between the positive electrode plate and the negative electrode plate.

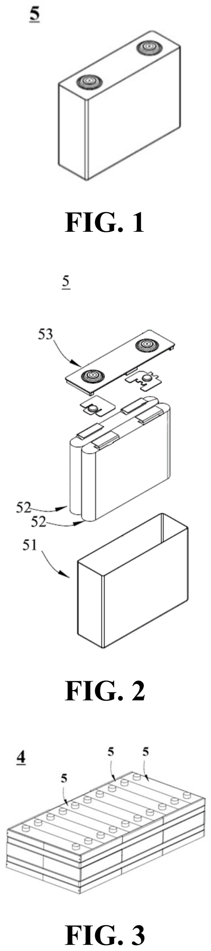

A shape of the battery cell is not particularly limited in the present application, and the battery cell may be a cylinder, a square, or any other shape. For example, FIG. 1 is a battery cell 5 of a square structure as an example.

In some of the examples, referring to FIG. 2, the outer package may include a case 51 and a cover plate 53. The case 51 may include a bottom plate and a side plate connected to the bottom plate, and the bottom plate and the side plate enclose to form an accommodating cavity. The case 51 has an opening in communication with the accommodating cavity, and the cover plate 53 can cover the opening to close the accommodating cavity. The positive electrode plate, the negative electrode plate, and the separator may be formed into an electrode assembly 52 by a winding process or a stacking process. The electrode assembly 52 is encapsulated within the accommodating cavity. The electrode assembly 52 is impregnated with the electrolyte solution. The number of the electrode assemblies 52 contained in the battery cell 5 may be one or more, and may be selected by those skilled in the art according to actual requirements.

The secondary battery may be a battery module 4 or a battery pack 1.

The battery module includes at least one battery cell. The number of the battery cells contained in the battery module may be one or more, and those skilled in the art may select the appropriate number according to the application and capacity of the battery module.

FIG. 3 is a battery module 4 as an example. Referring to FIG. 3, in the battery module 4, a plurality of battery cells 5 can be sequentially arranged in a length direction of the battery module 4. Of course, the plurality of battery cells may also be arranged in any other manner. The plurality of battery cells 5 may further be fixed by fasteners.

Optionally, the battery module 4 may further include a shell having an accommodating space, and the plurality of battery cells 5 are accommodated in the accommodating space.

In some of the examples, the above battery module may further be assembled into a battery pack, the number of the battery modules contained in the battery pack may be one or more, and those skilled in the art may select the appropriate number according to the application and capacity of the battery pack.

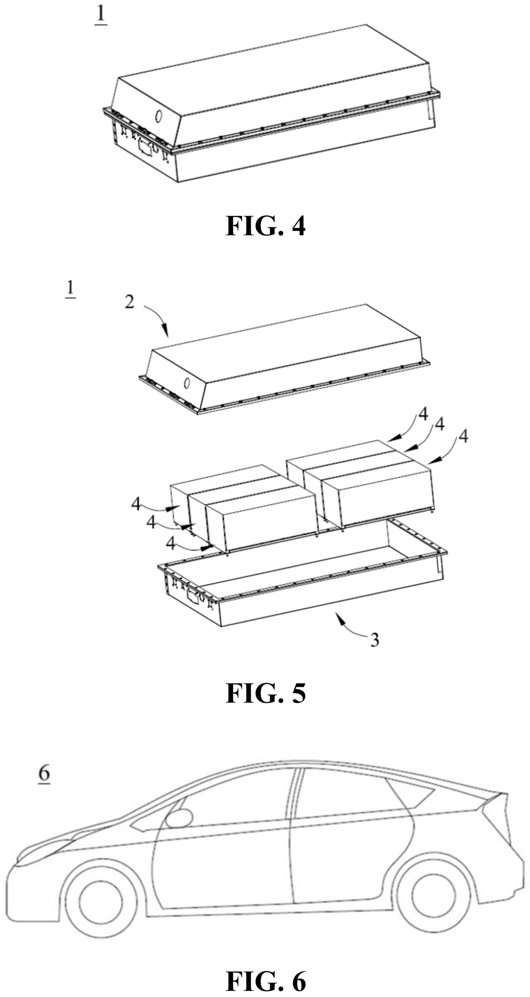

FIG. 4 and FIG. 5 are a battery pack 1 as an example. Referring to FIG. 4 and FIG. 5, the battery pack 1 may include a battery box and a plurality of battery modules 4 disposed in the battery box. The battery box comprises an upper box 2 and a lower box 3, where the upper box 2 can cover the lower box 3 and forms an enclosed space for accommodating the battery module 4. The plurality of battery modules 4 may be arranged in the battery box in any manner.

In addition, the present application further provides an electrical apparatus. The electrical apparatus includes the secondary battery provided by the present application. The secondary battery may be used as a power source of the electrical apparatus, or may be used as an energy storage unit of the electrical apparatus. The electrical apparatus may include but not limited to mobile equipment, an electric vehicle, an electric train, a ship, a satellite, an energy storage system, etc. The mobile equipment may be, for example a mobile phone and a laptop; and the electric vehicle, for example, may be but not limited to an all-electric vehicle, a hybrid electric vehicle, a plug-in hybrid electric vehicle, an electric bicycle, an electric scooter, an electric golf cart, an electric truck, etc.

As the electrical apparatus, the secondary battery may be selected according to its usage needs.

FIG. 6 is an electrical apparatus 6 as an example. The electrical apparatus is an all-electric vehicle, a hybrid electric vehicle, a plug-in hybrid electric vehicle, or the like. To satisfy the need of the electrical apparatus for a high power and high energy density of secondary batteries, a battery pack or a battery module can be used.

As another example, the electrical device may be a mobile phone, a tablet personal computer, a laptop, etc. The apparatus is generally required to be thin and light, and may use a battery cell as a power source.

Examples of the present application will be described below. The examples described below are exemplary, are merely intended to explain the present application, and cannot be understood as limitation to the present application. If the technology or conditions are not specified in the examples, please follow the technology or conditions described in the literature in this field or follow the product manual. Reagents or instruments used without specifying the manufacturers are conventional products that can be purchased form the market.

### Example 1

### 1) Preparation of positive electrode plate

A positive electrode active material NCM811, conductive carbon black SP, and a binder PVDF were dispersed in a solvent NMP at a weight ratio of 98:1:1 to be uniformly mixed, so as to obtain a positive electrode slurry; and surfaces of two sides of a positive electrode current collector aluminum foil were uniformly coated with the positive electrode slurry, and the positive electrode plate was obtained after drying and cold pressing, wherein the coating amount per unit area on the two sides is 0.27g/1540.25mm².

### 2) Preparation of negative electrode plate

### 2.1. Preparation of negative electrode active material

Preparation of a silicon-based material of which a surface is coated with a graphene layer:
Si nanoparticles (Dv50=80nm) and a second dispersant PVP were uniformly dispersed in deionized water at a ratio of 1:2 to form a solution with a Si nanoparticle content of 5wt%, and graphene oxide powder was added at 10% of the weight of the Si nanoparticles, mixed uniformly, and dried at 80°C. The solution was transferred to a tubular furnace, air in the tube was evacuated with a vacuum oil pump, then argon and hydrogen (argon: hydrogen=95:5) were slowly introduced as protective gas, a temperature was increased to 700°C at a heating rate of 3°C/min, after high-temperature calcination was performed for 2 hours, the temperature was naturally cooled to prepare a pure silicon material (graphene@silicon-based material) of which a surface is coated with a graphene layer, and a thickness of the graphene layer was 1 nm.

Preparation of silicon composite material precursor:
a main material and a first dispersant PVP were added into deionized water at a weight ratio of 80%:20%, stirred and dispersed uniformly to obtain a standby suspension. The main material includes natural graphite particles and the silicon-based material of which the surface is coated with the graphene layer, wherein the weight ratio of the natural graphite particles to the silicon-based material of which the surface is coated with the graphene layer is 50%:50%, and a solid content of the standby suspension is 20%; the standby suspension is subjected to spray drying using a spray dryer, the temperature is set to be 180°C, and the drying air volume is set to be 0.15 m³/min, to obtain a spherical precursor of the composite silicon material;
preparation of carbon coating layer: the precursor was placed in a clean porcelain boat, then the porcelain boat was placed in a tubular furnace with Ar gas as protective gas, the temperature was increased to 700°C at a heating rate of 5°C and kept for 2 h, then the Ar gas was replaced with CH₄ gas for 20 min, then the temperature was cooled to a room temperature to prepare the carbon coating layer with a thickness of 25 nm, and a core coated by the carbon coating layer includes natural graphite and the silicon-based material of which the surface is coated with the graphene layer to obtain a silicon composite material.

2.2. The negative electrode active material prepared in step 2.1, the thickener sodium carboxymethyl cellulose, the binder styrene butadiene rubber, and the conductive agent acetylene black were mixed according to a mass ratio of 97:1:1:1, deionized water was added, and a negative electrode slurry was obtained under the action of a vacuum stirrer; the surfaces of the two sides of the copper foil were uniformly coated with the negative electrode slurry; and the copper foil was dried at a room temperature, transferred to an oven at 120°C for drying for 1 h, and then subjected to cold pressing and slitting to obtain a negative electrode plate, wherein the coating amount per unit area on the two sides is 0.17g/1540.25mm².

### 3) Separator

A polypropylene separator with a thickness of 12 µm was selected.

### 4) Preparation of electrolyte solution

An organic solvent is a mixed solution containing ethylene carbonate (EC), ethyl methyl carbonate (EMC), and diethyl carbonate (DEC), wherein a volume ratio of EC to EMC to DEC is 20:20:60. In an argon-atmosphere glove box with a water content less than 10 ppm, fully-dried lithium salt LiPF6 was dissolved in the organic solvent and uniformly mixed to obtain an electrolyte solution. Wherein, a concentration of the lithium salt was 1 mol/L.

### 5) Preparation of battery

The positive electrode plate, the separator, and the negative electrode plate were stacked in order, so that the separator was placed between the positive electrode plate and the negative electrode plate to play an isolating role, then the separator are wound into a square bare cell, loaded into an aluminum-plastic film, and then baked at 80°C to remove water, 10 g of the corresponding non-aqueous electrolyte solution was injected and sealed, and a finished battery with a capacity of 4000 mAh was obtained after standing, hot and cold pressing, formation, fixture, capacity division and other processes.

The preparation methods of secondary batteries of Examples 2-30 are similar to that of the secondary battery of Example 1, the main difference being that the types and proportions of materials are different, as shown in Table 1 below.

The preparation method of the secondary battery of Comparative Example 1 is similar to that of the secondary battery of Example 1, the main difference being that the surface of the silicon-based material is not coated with the graphene layer.

The preparation method of the secondary battery of Comparative Example 2 is similar to that of the secondary battery of Example 1, the main difference being that natural graphite is not used in the main material.

**Table 1**

| **Graphite** | | | | **Graphene@Silicon-based material** | | | | **Carbon coating layer** | **First dispersant** | |
|---|---|---|---|---|---|---|---|---|---|---|
| | Dv50 | Type | Mass ratio | Type of silicon-based material | Dv50 of silicon-based material | Thickness of graphene layer | Mass ratio | Thickness | Type | Proportion |
| Example 1 | 3 | Natural graphite | 50% | Pure Silicon | 80 nm | 1 nm | 50% | 25 nm | PVP | 20% |
| Example 2 | **1** | Natural graphite | 50% | Pure Silicon | 80 nm | 1 nm | 50% | 25 nm | PVP | 20% |
| Example 3 | **5** | Natural graphite | 50% | Pure Silicon | 80 nm | 1 nm | 50% | 25 nm | PVP | 20% |
| Example 4 | 3 | **Artificial graphite** | 50% | Pure Silicon | 80 nm | 1 nm | 50% | 25 nm | PVP | 20% |
| Example 5 | 3 | Natural graphite | **10%** | Pure Silicon | 80 nm | 1 nm | **90%** | 25 nm | PVP | 20% |
| Example 6 | 3 | Natural graphite | **30%** | Pure Silicon | 80 nm | 1 nm | **70%** | 25 nm | PVP | 20% |
| Example 7 | 3 | Natural graphite | **70%** | Pure Silicon | 80 nm | 1 nm | **30%** | 25 nm | PVP | 20% |
| Example 8 | 3 | Natural graphite | **90%** | Pure Silicon | 80 nm | 1 nm | **10%** | 25 nm | PVP | 20% |
| Example 9 | 3 | Natural graphite | 50% | Pure Silicon | **10 nm** | 1 nm | 50% | 25 nm | PVP | 20% |
| Example 10 | 3 | Natural graphite | 50% | Pure Silicon | **50 nm** | 1 nm | 50% | 25 nm | PVP | 20% |
| Example 11 | 3 | Natural graphite | 50% | Pure Silicon | **70 nm** | 1 nm | 50% | 25 nm | PVP | 20% |
| Example 12 | 3 | Natural graphite | 50% | Pure Silicon | **90 nm** | 1 nm | 50% | 25 nm | PVP | 20% |
| Example 13 | 3 | Natural graphite | 50% | Pure Silicon | **110 nm** | 1 nm | 50% | 25 nm | PVP | 20% |
| Example 14 | 3 | Natural graphite | 50% | Pure Silicon | **115 nm** | 1 nm | 50% | 25 nm | PVP | 20% |
| Example 15 | 3 | Natural graphite | 50% | **Silicon monoxide** | **3 µm** | 1 nm | 50% | 25 nm | PVP | 20% |
| Example 16 | 3 | Natural graphite | 50% | **Silicon monoxide** | **2 µm** | 1 nm | 50% | 25 nm | PVP | 20% |
| Example 17 | 3 | Natural graphite | 50% | **Silicon monoxide** | **5 µm** | 1 nm | 50% | 25 nm | PVP | 20% |
| Example 18 | 3 | Natural graphite | 50% | Pure Silicon | 80 nm | **0.3 nm** | 50% | 25 nm | PVP | 20% |
| Example 19 | 3 | Natural graphite | 50% | Pure Silicon | 80 nm | **1.5 nm** | 50% | 25 nm | PVP | 20% |
| Example 20 | 3 | Natural graphite | 50% | Pure Silicon | 80 nm | **3 nm** | 50% | 25 nm | PVP | 20% |
| Example 21 | 3 | Natural graphite | 50% | Pure Silicon | 80 nm | 1 nm | 50% | **5 nm** | PVP | 20% |
| Example 22 | 3 | Natural graphite | 50% | Pure Silicon | 80 nm | 1 nm | 50% | **15 nm** | PVP | 20% |
| Example 23 | 3 | Natural graphite | 50% | Pure Silicon | 80 nm | 1 nm | 50% | **35 nm** | PVP | 20% |
| Example 24 | 3 | Natural graphite | 50% | Pure Silicon | 80 nm | 1 nm | 50% | **60 nm** | PVP | 20% |
| Example 25 | 3 | Natural graphite | 50% | Pure Silicon | 80 nm | 1 nm | 50% | 25 nm | **Polyethylene glycol** | 20% |
| Example 26 | 3 | Natural graphite | 50% | Pure Silicon | 80 nm | 1 nm | 50% | 25 nm | **CMC-Na** | 20% |
| Example 27 | 3 | Natural graphite | 50% | Pure Silicon | 80 nm | 1 nm | 50% | 25 nm | PVP | **5%** |
| Example 28 | 3 | Natural graphite | 50% | Pure Silicon | 80 nm | 1 nm | 50% | 25 nm | PVP | **15%** |
| Example 29 | 3 | Natural graphite | 50% | Pure Silicon | 80 nm | 1 nm | 50% | 25 nm | PVP | **25%** |
| Example 30 | 3 | Natural graphite | 50% | Pure Silicon | 80 nm | 1 nm | 50% | 25 nm | PVP | **30%** |
| Comparative Example 1 | 3 | Natural graphite | 100% | Pure Silicon | 80 nm | None | 0% | 25 nm | PVP | 20% |
| Comparative Example 2 | 3 | None | 50% | Pure Silicon | 80 nm | 1 nm | 50% | 25 nm | PVP | None |

In addition, the tap density, the specific surface area and the Dv50 of the silicon composite materials prepared in Examples 1-30 and Comparative Examples 1-2 are summarized in Table 2 below:

**Table 2**

| | Tap density (g/cm³) | Specific surface area (m²/g) | Dv50 (µm) of silicon composite material |
|---|---|---|---|
| Example 1 | 1.1 | 1 | 15 |
| Example 2 | 1.05 | 1.1 | 3 |
| Example 3 | 1.3 | 0.9 | 25 |
| Example 4 | 1.1 | 1 | 15 |
| Example 5 | 1.3 | 1.1 | 6 |
| Example 6 | 1.2 | 1.17 | 12 |
| Example 7 | 1.05 | 1.35 | 15 |
| Example 8 | 0.9 | 1.4 | 15 |
| Example 9 | 1.1 | 1 | 15 |
| Example 10 | 1.1 | 1 | 15 |
| Example 11 | 1.1 | 1 | 15 |
| Example 12 | 1.1 | 1 | 15 |
| Example 13 | 1.1 | 1 | 15 |
| Example 14 | 1.1 | 1 | 15 |
| Example 15 | 1.05 | 0.7 | 15 |
| Example 16 | 0.95 | 0.8 | 8 |
| Example 17 | 1.2 | 0.6 | 30 |
| Example 18 | 1.1 | 1 | 15 |
| Example 19 | 1.1 | 1 | 15 |
| Example 20 | 1.1 | 1 | 15 |
| Example 21 | 1.1 | 1 | 15 |
| Example 22 | 1.1 | 1 | 15 |
| Example 23 | 1.1 | 1 | 15 |
| Example 24 | 1.1 | 1 | 15 |
| Example 25 | 1.1 | 1 | 15 |
| Example 26 | 1.1 | 1 | 15 |
| Example 27 | 1.1 | 1 | 15 |
| Example 28 | 1.1 | 1 | 15 |
| Example 29 | 1.1 | 1 | 15 |
| Example 30 | 1.1 | 1 | 15 |
| Comparative Example 1 | 1.1 | 1 | 15 |
| Comparative Example 2 | 1.1 | 1 | 15 |

### Test Example:

Test method:
(1) Anode full-charge rebound:
   a micrometer is used to measure a thickness H1 of the negative electrode plate obtained by cold pressing and slitting, then the cell is fully charged and disassembled, and then the micrometer is used to measure a thickness H2 of the negative electrode plate, wherein the negative electrode full-charge rebound=(H2/H1-1)*100%.
(2) Direct-current internal resistance:
   the cell is adjusted to 50% SoC, and a direct-current internal resistance value of discharge at 4 C for 30 s is recorded.
(3) Fast charging performance:
   At 25°C, a battery with a pre-embedded copper wire is taken, charged at a constant current of 0.33 C to 4.2 V, and continued to be charged at a constant voltage until the current reaches 0.05 C; at this point, the battery is in a fully-charged state, the charging capacity at this time is recorded as a first cycle of charging capacity; and after the battery is left stand for 30 min, the battery is discharged at a constant current of 0.33 C to 2.8 V, which is a cyclic charging and discharging process, and the discharge capacity at this time is recorded as a first cycle of discharging capacity. Then lithium plating is started, charging equipment is connected to a copper wire and a positive electrode, charging is performed at a constant current of 20 uA for 2 h, then the charging equipment is connected to the copper wire and a negative electrode, charging is performed at a constant current of 20 uA for 2 h, the copper wire after lithium plating is a reference electrode, and a potential of the reference electrode is 0 mV by default. After lithium plating, the battery is charged at a constant current of 2 C, and a potential difference between the anode and the reference electrode is recorded. When the potential difference reaches 0 mV, a ratio of the charged capacity to the first cycle of charging capacity is recorded. This ratio represents the fast charging performance of the cell.
(4) Cycle performance:
   At 25°C, the battery is taken, charged at a constant current of 0.5 C to 4.2 V, and continued to be charged at a constant voltage until the current reaches 0.05 C; at this point, the battery is in a fully-charged state, the charging capacity at this time is recorded as a first cycle of charging capacity; and after the battery is left stand for 30 min, the battery is discharged at a constant current of 1 C to 2.8 V, which is a cyclic charging and discharging process, and the discharge capacity at this time is recorded as a first cycle of discharging capacity. The battery is subjected to a cyclic charge-discharge test according to the above method, the discharging capacity after each cycle is recorded until the discharging capacity of the battery decays to 80% of the first cycle of discharging capacity, and the number of cycles at this moment is used to represent the cycle life of the battery.

Test results are shown in Table 3 below:

**Table 3**

| | **Anode full-charge rebound** | **Direct-current internal resistance (mΩ)** | **Fast charging performance** | **Cycle life (cycles)** |
|---|---|---|---|---|
| Example 1 | 36% | 1.4 | 72% | 815 |
| Example 2 | 34% | 1.37 | 73% | 806 |
| Example 3 | 37% | 1.41 | 70% | 801 |
| Example 4 | 36% | 1.4 | 71% | 836 |
| Example 5 | 42% | 1.45 | 68% | 758 |
| Example 6 | 40% | 1.42 | 70% | 779 |
| Example 7 | 34% | 1.39 | 73% | 827 |
| Example 8 | 32% | 1.37 | 75% | 854 |
| Example 9 | 33% | 1.36 | 78% | 831 |
| Example 10 | 34% | 1.38 | 75% | 828 |
| Example 11 | 35% | 1.39 | 73% | 819 |
| Example 12 | 37% | 1.41 | 71% | 811 |
| Example 13 | 38% | 1.42 | 70% | 809 |
| Example 14 | 38.5% | 1.42 | 70% | 808 |
| Example 15 | 32% | 1.41 | 70% | 825 |
| Example 16 | 31% | 1.38 | 71% | 816 |
| Example 17 | 33% | 1.42 | 68% | 812 |
| Example 18 | 37% | 1.39 | 73% | 812 |
| Example 19 | 37% | 1.4 | 72% | 824 |
| Example 20 | 37% | 1.42 | 71% | 829 |
| Example 21 | 36% | 1.4 | 71% | 802 |
| Example 22 | 36% | 1.4 | 72% | 809 |
| Example 23 | 36% | 1.41 | 73% | 830 |
| Example 24 | 36% | 1.44 | 75% | 852 |
| Example 25 | 36% | 1.43 | 73% | 813 |
| Example 26 | 35% | 1.45 | 74% | 815 |
| Example 27 | 38% | 1.38 | 73% | 815 |
| Example 28 | 37% | 1.39 | 73% | 816 |
| Example 29 | 36% | 1.45 | 70% | 805 |
| Example 30 | 36% | 1.46 | 69% | 802 |
| Comparative Example 1 | 59% | 1.48 | 58% | 630 |
| Comparative Example 2 | 97% | 1.65 | 54% | 520 |

From the comparison between Examples 1-30 and Comparative Examples 1-2, it can be seen that the present application comprehensively improves the expandability and a conductive network of the silicon composite material by coating the surface of the silicon-based material with the conductive material such as the graphene layer, and cooperating the conductive material such as natural graphene with the silicon-based material of which the surface is coated with the conductive material such as the graphene layer, thereby effectively improving the cycle performance and the fast charging performance.

From the comparison between Examples 1-5, it can be seen that reasonable control of the Dv50 of the graphite is beneficial to the further improvement of the fast charging performance and the cycle life.

From the comparison between Example 1 and Example 4, it can be seen that the use of the artificial graphite can further optimize the cycle life.

From the comparison between Example 1 and Examples 5-8, it can be seen that the fast charging performance and the cycle performance can be further improved by reasonably controlling the mass percentage of the first conductive material and the silicon-based material of which the surface is coated with the second coating layer. In addition, from the comparison between Example 1 and Examples 5-8, it can further be seen that when the mass percentage of the graphite and the graphene@silicon-based material varies in a range of (10%-90%):(90%-10%), the anode full-charge rebound can be maintained at a low level.

From the comparison between Example 1 and Examples 9-17, it can be seen that reasonable control of the particle size of the silicon-based material is beneficial to the improvement of the fast charging performance and the cycle life.

From the comparison between Example 1 and Examples 18-20, it can be seen that reasonable control of the thickness of the graphene layer is beneficial to the improvement of the cycle life.

From the comparison between Example 1 and Examples 21-24, it can be seen that reasonable control of the thickness of the carbon coating layer is beneficial to the improvement of the fast charging performance and the cycle life.

From the comparison between Example 1 and Examples 25-30, it can be seen that reasonable control of the amount of the first dispersant is beneficial to the improvement of the cycle performance and the fast charging performance.

The above description of the various examples tends to emphasize the differences between the various examples, and the same or similar aspects thereof can be referenced to each other. For the sake of simplicity, it will not be repeated here.

It should be noted that the present application is not limited to the above embodiments. The above embodiments are only examples, and embodiments that have the same composition and exert the same effect as the technical ideas within the scope of the technical solution of the present application are included in the technical scope of the present application. In addition, without departing from the scope of the subject matter of the present application, various modifications that can be conceived by those skilled in the art are applied to the embodiments, and other modes constructed by combining some of the constituent elements of the embodiments are also included in the scope of the present application.

## Claims

1. A silicon composite material, comprising a core and a first coating layer covering a surface of the core, wherein the core comprises a first core and a second core; the first core comprises a first conductive material; the first conductive material comprises a flexible conductive material; the second core comprises a silicon-based material of which a surface is coated with a second coating layer; and the second coating layer comprises a second conductive material.

2. The silicon composite material according to claim 1, wherein the silicon-based material is a nanoscale or micronscale silicon-based material.

3. The silicon composite material according to claim 2, wherein Dv50 of the silicon-based material is in a range from 10 nm to 5 µm.

4. The silicon composite material according to any one of claims 1 to 3, wherein the silicon-based material comprises one or both of pure silicon and silicon monoxide.

5. The silicon composite material according to claim 4, wherein Dv50 of the pure silicon is in a range from 10 nm to 150 nm; and Dv50 of the silicon monoxide is in a range from 2 µm to 5 µm.

6. The silicon composite material according to claim 5, wherein the Dv50 of the pure silicon is in a range from 50 nm to 100 nm; and the Dv50 of the silicon monoxide is in a range from 2.5 µm to 3.5 µm.

7. The silicon composite material according to any one of claims 1 to 6, wherein the flexible conductive material comprises one or both of soft carbon or graphite.

8. The silicon composite material according to claim 7, wherein the graphite comprises one or both of the following features:
(1) Dv50 of the graphite is in a range from 1 µm to 5 µm; and
(2) the graphite comprises one or both of natural graphite and artificial graphite.

9. The silicon composite material according to claim 8, wherein the Dv50 of the graphite is in a range from 1 µm to 3.5 µm.

10. The silicon composite material according to any one of claims 1 to 9, wherein the second conductive material comprises one or more of graphene, a single-walled carbon nanotube or a multi-walled carbon nanotube.

11. The silicon composite material according to any one of claims 1 to 10, wherein a thickness of the second coating layer is in a range from 0.3 nm to 3 nm.

12. The silicon composite material according to claim 11, wherein the thickness of the second coating layer is in a range from 1.2 nm to 3 nm.

13. The silicon composite material according to any one of claims 1 to 12, wherein a mass percentage of the first conductive material to the silicon-based material of which the surface is coated with the second coating layer is (10%-90%):(90%-10%).

14. The silicon composite material according to claim 13, wherein a mass percentage of the first conductive material to the silicon-based material of which the surface is coated with the second coating layer is (40%-90%):(60%-10%).

15. The silicon composite material according to any one of claims 1 to 14, wherein the first coating layer comprises a carbon coating layer.

16. The silicon composite material according to claim 15, wherein the carbon coating layer comprises one or both of the following features:
(1) a thickness is in a range from 5 nm to 60 nm; and
(2) the carbon coating layer comprises amorphous carbon.

17. The silicon composite material according to claim 16, wherein a thickness of the carbon coating layer is in a range from 20 nm to 60 nm.

18. The silicon composite material according to any one of claims 1 to 17, wherein the silicon composite material comprises one or more of the following features:
(1) tap density is in a range from 0.9 g/cm³ to 1.3 g/cm³;
(2) a specific surface area is in a range from 0.6 m²/g to 1.4 m²/g; and
(3) the Dv50 of the silicon composite material is in a range from 3 µm to 30 µm.

19. A preparation method for a silicon composite material, comprising the following steps:
mixing a first conductive material, a silicon-based material of which a surface is coated with a second coating layer, and water to prepare a dispersion; wherein the second coating layer comprises a second conductive material, and the first conductive material comprises a flexible conductive material;
drying the dispersion to prepare a precursor; and
coating the precursor to form a first coating layer, wherein the first coating layer is coated on a surface of a core, the core comprises a first core and a second core, the first core comprises the first conductive material, and the second core comprises the silicon-based material of which the surface is coated with the second coating layer.

20. The preparation method for the silicon composite material according to claim 19, wherein a method for preparing the silicon-based material of which the surface is coated with the second coating layer comprises one or both of a vapor reaction method and a liquid-phase coating method, and the second coating layer comprises graphene.

21. The preparation method for the silicon composite material according to claim 20, wherein preparing the silicon-based material of which the surface is coated with the second coating layer by the vapor reaction method comprises the following steps:
performing vapor deposition on the silicon-based material in mixed gas of second carbon source gas and carbon dioxide to form the second coating layer, and preparing the silicon-based material of which the surface is coated with the second coating layer.

22. The preparation method for the silicon composite material according to claim 21, wherein the vapor reaction method comprises one or more of the following features:
(1) a temperature of the vapor deposition is in a range from 600°C to 800°C; and
(2) the second carbon source gas comprises hydrocarbon gas.

23. The preparation method for the silicon composite material according to claim 20, wherein preparing the silicon-based material of which the surface is coated with the second coating layer by the liquid-phase coating method comprises the following steps:
mixing the silicon-based material with a second dispersant, water, and graphene oxide to prepare a mixed solution; and
drying and calcining the mixed solution to prepare the silicon-based material of which the surface is coated with the second coating layer.

24. The preparation method for the silicon composite material according to claim 23, wherein the liquid phase coating method comprises one or more of the following features:
(1) the second dispersant comprises one or more of polyvinylpyrrolidone, polyethylene glycol, or sodium carboxymethyl cellulose;
(2) a drying condition comprises: a temperature is in a range from 60°C to 80°C; and
(3) a calcination condition comprises: a temperature is increased to 600°C-800°C at a heating rate of 2°C/min to 5°C/min under a reducing atmosphere condition, and calcining is performed for 1 h to 3 h.

25. The preparation method for the silicon composite material according to any one of claims 19 to 24, wherein a solid content of the dispersion is in a range from 1% to 40%.

26. The preparation method for the silicon composite material according to any one of claims 19 to 25, wherein a process of preparing the dispersion further comprises a step of adding a first dispersant;
the first dispersant comprises one or more of polyvinylpyrrolidone, polyethylene glycol, or sodium carboxymethyl cellulose; and
a percentage of mass of the first dispersant to total mass of the first conductive material and the silicon-based material of which the surface is coated with the second coating layer is (70%-95%):(30%-5%).

27. The preparation method for the silicon composite material according to any one of claims 19 to 26, wherein the drying comprises spray drying, and the spray drying comprises one or both of the following conditions:
(1) a temperature is in a range from 150°C to 200°C; and
(2) an air volume is in a range from 0.08 m³/min to 0.2 m³/min.

28. The preparation method for the silicon composite material according to any one of claims 19 to 27, wherein the first coating layer comprises a carbon coating layer, and a step of forming the first coating layer comprises: placing the precursor in a reaction vessel, and introducing first carbon source gas for vapor deposition so as to form the first coating layer.

29. The preparation method for the silicon composite material according to claim 28, wherein a condition of introducing the first carbon source gas for vapor deposition comprises one or both of the following conditions:
(1) the first carbon source gas comprises one or both of CH₄ or C₂H₂; and
(2) a temperature is first increased to 600°C-800°C at a heating rate of 2°C/min to 10°C/min, the temperature is kept for 1h to 4h, and then the first carbon source gas is introduced for 15 min to 30 min.

30. A negative electrode plate, comprising a negative electrode current collector and a negative electrode active material layer disposed on at least one surface of the negative electrode current collector, wherein the negative electrode active material layer comprises one or more of the silicon composite material according to any one of claims 1 to 18 or the silicon composite material prepared by the preparation method according to any one of claims 19 to 29.

31. A secondary battery, comprising the negative electrode plate according to claim 30.

32. An electrical apparatus , comprising one or more of the negative electrode plate according to claim 30 or the secondary battery according to claim 31.
